# EUROPEAN PATENT APPLICATION

(11) **EP 4 079 392 A1**
(43) Date of publication of application: **26.10.2022**
(21) Application number: 22178925.8
(22) Date of filing: 16.04.2019
(51) Int. Cl.: B01D 39/16, B01D 39/20, B01D 39/18

(54) **HIGH BURST STRENGTH WET-LAID NONWOVEN FILTRATION MEDIA AND PROCESSES FOR PRODUCING SAME**

(30) Priority: 16.04.2018 US 201862658419 P
(62) Divisional of application: 19720140.3
(71) Applicant: Ahlstrom-Munksjö Oyj, 00100 Helsinki (FI)
(72) Inventor: SHIM, Jesse, - Daegu Metropolitan City (KR); LEE, Taylor, - Daegu Metropolitan City (KR); PARK, James, - Daegu Metropolitan City (KR); JEON, Matthew, - Daegu Metropolitan City (KR); KANG, Melissa, - Daegu Metropolitan City (KR)
(74) Representative: Laine IP Oy

(57) **Abstract**

Fibrous filtration media and method of making the same are provided. According to preferred embodiments, the filtration media includes a wet-laid hot area-calendered nonwoven fibrous web which includes synthetic staple fibers, and from about 20 wt.% to about 80 wt.%, based on total weight of the fibrous web, of sheath-core bicomponent staple fibers dispersed through the fibrous web. The fibrous web exhibits dry and wet burst strengths of greater than 10 bar, preferably greater than about 12 bar, e.g. greater than about 15 bar.

## Description

### FIELD

The embodiments disclosed herein relate generally to nonwoven filtration media. In preferred forms, the nonwoven filtration media comprises a low density fibrous web (e.g., less than about 0.45 g/cm³) which exhibits high dry and wet burst strength (e.g., greater than about 10 bar) and relatively small (e.g., less than about 40µm and, in some embodiments, less than about 25 µm) mean flow pore size that is especially suitable for use as a filtration media for gases and liquids.

### BACKGROUND

Spunbond nonwovens are now widely used for air filtration, such as dust collector filters, gas turbine intake air filters, powder coating filters and blasting filters, and for liquid filters such as pool and spa filters, waste-water filters, coolant filters since such applications require high dry and wet burst strength more than 10bar. Such a high burst strength requirement can be met by the use of spunbond nonwovens as the filtration media but typically cannot be met by other types of filtration media, e.g., media formed of cellulosic fibers wet-laid nonwoven media and meltblown media.

However, spunbond media cannot meet the current requirements for high filtration efficiency and long life time. In this regard, spunbond media has an inherent limit on filtration efficiency because its fiber diameters are in the range of 15~18µm which are relatively thick thereby preventing conventional spunbond media from overcoming the efficiency standards of M-class filters according to the EN779:2012 standard.

In addition, conventional spunbond media have lower dust holding capacity due to point bonding in the fibrous web. Normally, spunbond media for high dry and wet burst strength applications are treated by hot point-calendering in order to ensure fiber interbonding within the web. Such point bonding causes about 20% of the entire spunbond filtration media area to be essentially "dead space" due to the fiber-to-fiber point bonds (i.e., since the spunbond media is comprised entirely of thermoplastic fibers that melt under the conditions of the point-calendering). As a result, therefore, conventional spunbond media has a lower dust holding capacity compared to other types of filtration media.

To overcome the low efficiency of conventional spunbond media, other technologies such as nanofiber coating or laminating with ePTFE membrane can be added to the spunbond media. However, these additional processing requirements necessarily increase the costs of filter media and/or lead to very short life time of filters.

Wet-laid nonwoven filter media normally possess higher filtration efficiency and dust holding capacity than the typical spunbond media. Because wet-laid nonwoven media may be formed from a wide range of possible fiber diameters by virtue of the wet-laid process, substantially finer diameter fibers, for example, 0.8 denier fiber (which has a diameter of about 9 µm), 0.3 denier fiber (which has a diameter of about 5.5 µm), and 0.06 dtex fiber (which has a diameter of about 2.6 µm) than those forming conventional spunbond media may be employed. However, the typical wet-laid nonwoven filter media are not known to be useable for those filtration applications that require high dry and wet burst strength because the dry and wet burst strength of conventional wet-laid filter media is less than 10 bar, even though wet-laid filter media can be saturated with a binder resin and/or provided with binder fibers.

It would therefore be highly desirable if fibrous wet-laid filtration media was provided which possesses a high dry and wet burst strength (i.e., greater than 10 bar) so it could be used in applications that are traditionally served by spunbond media. It is towards fulfilling such needs that the embodiments disclosed herein are directed.

### SUMMARY OF EXEMPLARY EMBODIMENTS

The filtration media in accordance with the embodiments disclosed herein includes a area-calendered wet-laid nonwoven fibrous web which possesses a high dry and wet burst strength of greater than 10 bar, usually greater than 12 bar, for example greater than about 15 bar. The calendered wet-laid nonwoven fibrous web will also exhibit high filtration efficiency and dust holding capacity that cannot be achieved by conventional spunbond filtration media.

The embodiments disclosed herein are realized by providing a wet-laid nonwoven fibrous web comprising between about 20 to about 80 wt.%, based on the total weight of the fibrous web, of symmetrical sheath-core type bicomponent staple fibers with the balance being other synthetic staple fibers, with the nonwoven web being subject to hot area calender bonding. The presence of more than 20 wt.% sheath-core type bi-component fibers permit area bonding to be practiced so as to achieve substantially less filtration "dead space" as compared to the point-calender bonding which is typically used for spunbond media. A higher proportion of sheath-core type bicomponent fibers and the homogenous dispersion of such fibers throughout the nonwoven wet-laid mat allows the filtration media of the embodiments disclosed herein to achieve at least comparable, and usually better, dry and wet burst strength than that of spunbond media which is composed of continuous filaments, even though the fibrous web of the present invention contains a mass of relatively short cut (e.g., 1-24 mm) staple fibers with no continuous filaments.

These and other attributes of the various embodiments according to the invention will be better understood by reference to the following detailed descriptions thereof.

### BRIEF DESCRIPTION OF ACCOMPANYING DRAWINGS

Reference will be made to the accompanying drawings, wherein:

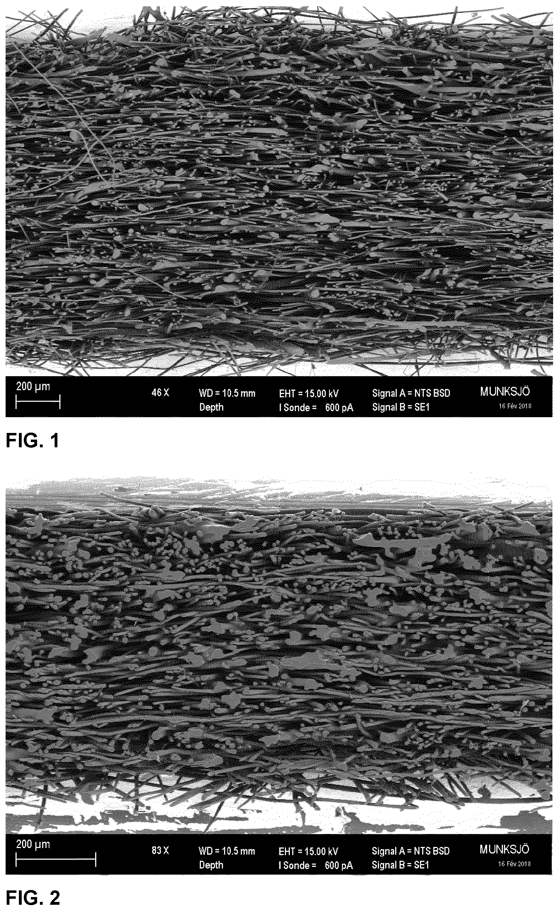

FIG. 1 is a scanning electron microscope (SEM) image of a cross-section of a conventional wet-laid fibrous web in accordance with Example 1 as described below as taken along the thickness of such media;
FIG. 2 is a SEM image of a cross-section of a fibrous web in accordance with the embodiments disclosed herein and described below as Example 2 as taken along the thickness of such media showing that the media contains thermally bonded binder fibers throughout the depth of the media which is believed to contribute to the high dry and wet burst strength that is exhibited thereby;

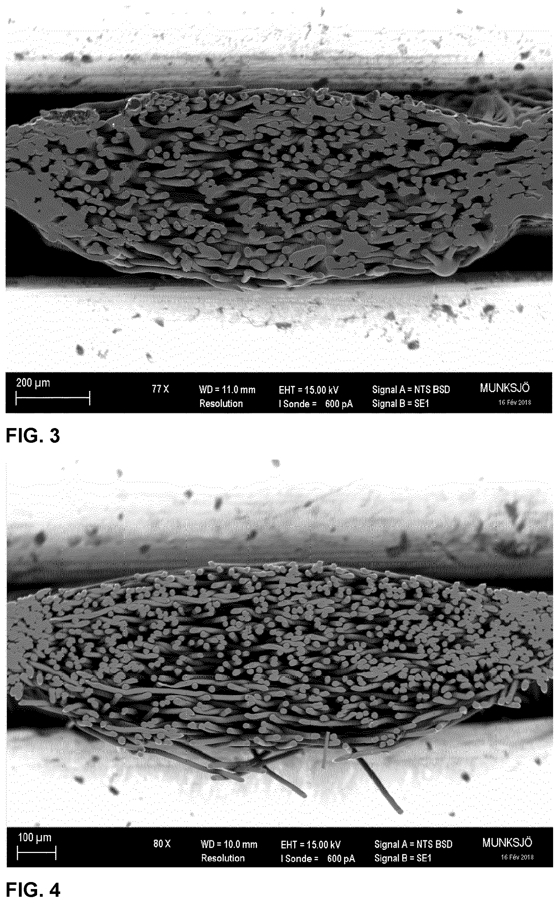

FIG. 3 is a SEM image of the cross-section of the comparative spun bond media of Comparative Example 1 below as taken along the thickness thereof;
FIG. 4 is a SEM image of the cross-section of the comparative spun bond media of Comparative Example 2 below as taken along the thickness thereof;
FIG. 5 is a graphical comparison of the pore size range of the standard wet-laid media of Example 1 and the inventive media of Example 2 as described below;
FIG. 6 is a graphical comparison of the pore size range of the inventive media of Example 2 as described below with the typical spun bond media of Comparative Examples 1 and 2 as described below;

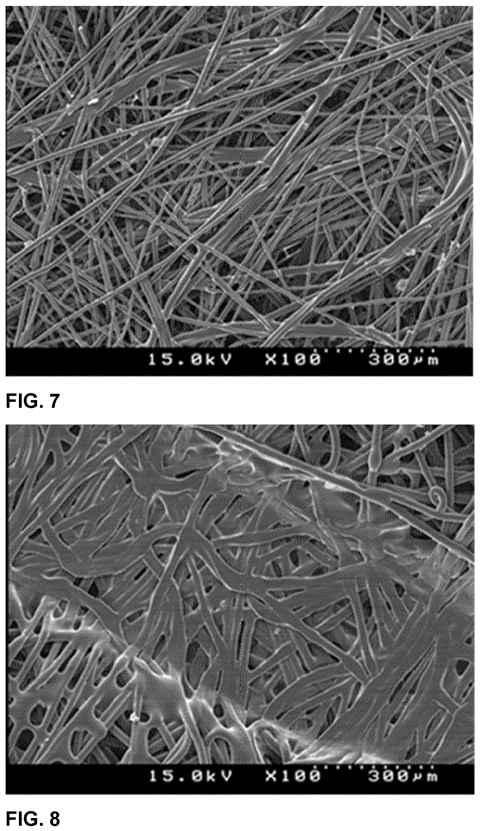

FIG. 7 is a SEM image of the surface of the inventive media of Example 2 as described below;

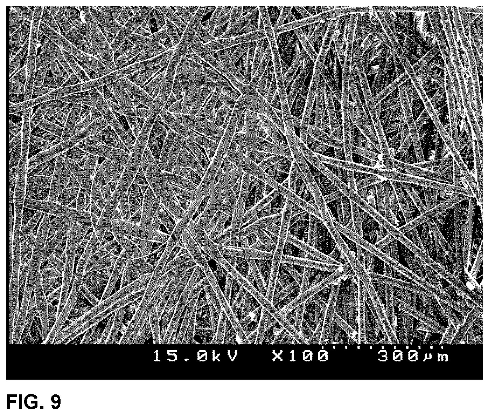

FIGS. 8 and 9 are SEM images of the surfaces of the typical spunbond media of Comparative Examples 1 and 2 as described below;
FIG. 10 is a diagrammatic view of the calendering process employed in accordance with an embodiment of the disclosed invention herein; and
FIGS. 11-13 are graph of selected pressure drop curves for the media according to Example 2, Comparative Example 1 and Comparative Example 2 below.

### DEFINITIONS

As used herein and in the accompanying claims, the terms below are intended to have the definitions as follows.

"Fiber" is a fibrous or filamentary structure having a high aspect ratio of length to diameter.

"Filament" denotes a fiber of extreme or indefinite length.

"Staple fiber" means a fiber which naturally possesses or has been cut or further processed to definite, relatively short, segments of definite or individual lengths.

"Fibrous" means a material that is composed predominantly of fiber and/or staple fiber.

The terms "non-woven", "web" or "mat" refer to a collection of fibers and/or staple fibers in a mass of such fibers which are randomly interlocked, entangled and/or bound to one another so as to form a self-supporting structural element.

The terms "synthetic fiber" and/or "man-made fiber" refer to fibers made from fiber-forming substances including polymers synthesized from chemical compounds, modified or transformed natural polymer and siliceous (glass) materials. Such fibers may be produced by conventional melt-spinning, solution-spinning, solvent-spinning and like filament production techniques.

A "cellulosic fiber" is a fiber composed of or derived from cellulose.

The term "thermoplastic" means a polymeric material which becomes pliable or moldable above a specific temperature and then returns to a solid state upon cooling.

### DETAILED DESCRIPTION

The calendered nonwoven wet-laid media of the embodiments disclosed herein may be in the form of 100% synthetic staple fibers, for example, a fibrous media comprised entirely of synthetic polymeric fibers, optionally containing other synthetic staple fibers (e.g., glass or other inorganic fibers). Thus, in preferred forms, the nonwoven media of the embodiments disclosed herein will be substantially (if not entirely) free of cellulosic or other natural staple fibers. In especially preferred forms, the calendered media of the embodiments disclosed herein will comprise a wet-laid nonwoven web consisting of 20-80% of bicomponent staple fibers with the remainder being synthetic staple fibers, preferably synthetic polymeric staple fibers.

### A. BICOMPONENT STAPLE FIBERS

The nonwoven fibrous web according to the embodiments disclosed herein comprises a synthetic bicomponent staple fiber. As is known per se, the bicomponent staple fibers will have been formed by extruding polymer sources from separate extruders and spun together to form a single fiber. Typically, two separate polymers are extruded, although a bicomponent fiber may encompass extrusion of the same polymeric material from separate extruders with the polymeric material in each extruder having somewhat different properties (e.g., melting points). The extruded polymers are arranged in substantially constantly positioned distinct zones across the cross-section of the bicomponent fibers and extend substantially continuously along the length of the bicomponent fibers. The configuration of bicomponent fibers employed in the practice of the embodiments disclosed herein are preferably substantially symmetric sheath-core bicomponent fibers whereby the polymeric sheath completely surrounds and envelops the polymeric core at an area ratio of sheath to core of between about 25/75 to about 75/25, typically about between about 50/50 to about 70/30.

The bicomponent staple fibers which are preferably bicomponent polyethylene terephthalate (PET) staple fibers having a lower melting point PET sheath surrounding a higher melting point PET core. In preferred forms, the bicomponent PET staple fibers will include a PET sheath having a melting point of between about 120°C to about 190°C, typically between about 140 to 190°C , more preferably between 150°C to about 180°C, e.g., about 165°C (+/- 3°C), and a PET core having a melting point that is at least about 50°C, typically at least about 75°C, e.g., about 100°C (+/- 5°C) greater than the melting point of the PET sheath. The PET core of the bicomponent staple fibers may therefore have a melting point of between about 220°C to about 280°C, typically between about 250°C to about 270°C, e.g., about 260°C (+/- 5°C). One preferred bicomponent staple fiber employed in the practice of the embodiments disclosed herein is LMF50 bicomponent staple fibers commercially available from Huvis Corporation having a denier of about 4 and a length of about 6 mm. The sheath portion of the bicomponent fiber may also be comprised of other thermoplastic polymeric material, including polyalkylenes (e.g., polyethylenes, polypropylenes and the like) and polyamides (nylons, for example, nylon-6, nylon 6,6, nylon-6,12, and the like).

The bicomponent staple fibers will be present in the filtration media in an amount of 20 wt.% to about 80 wt.%, for example between about 25 wt.% to about 60 wt.%, or even about 30 wt.% to 50 wt% (+/-0.5 wt.%), based on the total weight of the fibers in the fibrous web.

### B. SYNTHETIC STAPLE FIBERS

The nonwoven fibrous web of the embodiments described herein will also comprise synthetic fibers which include between about 20 wt.% to about 80 wt.%, for example between about 40 wt.% to about 75 wt.%, based on total weight of fibrous web, of thermoplastic staple fibers. Preferably, the thermoplastic staple fibers will be less than about 20 µm in average diameter, for example between about 2.5 µm to about 15 µm, with lengths between about 1 mm to about 24 mm, for example, between about 3 mm to about 12 mm.

The synthetic staple fibers employed in the practice of the embodiments disclosed herein can be virtually any staple fiber formed of a thermoplastic polymeric material. Exemplary thermoplastic staple fibers therefore include polyesters (e.g., polyalkylene terephthalates such as polyethylene terephthalate (PET), polybutylene terephthalate (PBT) and the like), polyalkylenes (e.g., polyethylenes, polypropylenes and the like), poyacrylonitriles (PAN), and polyamides (nylons, for example, nylon-6, nylon 6,6, nylon-6,12, and the like). Preferred are PET fibers which exhibit good chemical and thermal resistance suitable for filtration end use applications.

In certain preferred forms, the nonwoven fibrous web will comprise a mixture of differently sized synthetic fibers. In this regard, the media may comprise a mixture of between about 20 wt.% to about 80 wt.%, based on total weight of the fibrous web, of at least one type of synthetic polymeric fibers having an average diameter of between about 2.5 µm to about 10 µm, and between about 30 wt.% to about 60wt.%, based on total weight of the fibrous web, of a second type of synthetic polymer fibers having an average diameter of between about 10 µm to about 20 µm. The first type of synthetic fibers may have an average length of between about 1 mm to about 6 mm, while the second type of synthetic fibers may have an average length of between about 5 mm to about 24 mm.

The synthetic staple fibers employed in the wet-laid fibrous media may also include between about 5 wt.% to about 30 wt.%, typically between 10wt.% to about 20 wt.%, based on total weight of the fibrous web, of a regenerated cellulosic fiber, preferably lyocell staple fibers. The lyocell staple fibers may have an average diameter of about 25 µm or less, typically 15 µm or less, e.g., between about 10 µm to about 15 µm. The average length of the lyocell staple fibers is typically between about 1 mm to about 8 mm, or between about 2 mm to about 6 mm, or about 3 mm to about 4 mm. Preferred lyocell fibers are commercially available from Engineered Fibers Technology, LLC of Shelton, CT under the tradename TENCEL^{®} lyocell fibers which have about 1.7 denier and about 4 mm staple length.

Glass microfibers may also optionally be present in admixture with the other synthetic fibers as previously described in amounts sufficient to improve efficiency of the fibrous media as a filter. Typically, the glass microfibers, if present, will be employed in amounts of 0-20 wt.%, typically less than about 10 wt.%, based on total weight of the fibrous web. Glass microfibers having an average fiber diameter of between about 0.2 µm to about 5 µm, typically between about 0.5 µm to about 2.5 µm ± about 0.1 µm, may be employed. Preferred glass microfibers for the fibrous media of the embodiments described herein may be commercially obtained as C04 glass fibers (average fiber diameter of 0.5µm), C06 glass fibers (average fiber diameter of 0.65 µm) and C26 glass fibers (average fiber diameter of 2.6 µm) from Lauscha Fiber International of Summerville, SC.

### C. OPTIONAL COMPONENTS

Additives conventionally employed in wet-laid filtration media, such as for example, wet strength additives, optical brighteners, fiber retention agents, colorants, separation aides (e.g., silicone additives and associated catalyzers), fire or flame retardants (e.g., in the form of particulates or fibers) and the like may also be present in the fibrous web. If present, these additives may be included in amounts of up to about 30 wt.%, preferably up to about 20 wt.%, for example between about 1 wt.% to about 20 wt.%, based on total weight of the fibrous web. If flame retardant fibers are incorporated into the fibrous web, the flame retardant fibers can be used between about 40 to about 80 wt%, based on the total weight of the fibrous web.

### D. METHODS OF MAKING

The nonwoven fibrous web described herein may be made by any conventional "wet-laid" paper-making technology. Thus, for example, predetermined amounts of the synthetic fibers and the sheath-core bicomponent staple fibers (along with any optional components, such as the glass fibers, basic thermoplastic fibers and/or additives) and water may be placed in a pulper or beater. The fibers are mixed and dispersed by the pulper or beater evenly in the water to form a slurry batch. Some mechanical work can also be performed on the fibers to affect physical parameters, such as permeability, surface properties and fiber structure. The slurry batch may thereafter be transferred to a mixing chest where additional water is added and the fibers are homogenously blended. The blended slurry may then be transferred to a machine chest where one or more slurry batches can be combined, allowing for a transfer from a batch to a continuous process. Slurry consistency is defined and maintained by agitation to assure even dispersion of fibers. In this regard, the slurry may optionally be passed through a refiner to adjust physical parameters.

The slurry is then transferred to a moving wire screen where water is removed by means of gravity and suction. As water is removed, the fibers form into a nonwoven fibrous web or sheet having characteristics determined by a number of process variables, including for example, the slurry flow rate, machine speed, and drainage parameters. The formed web may optionally be compressed while still wet so as to compact the paper and/or modify its surface characteristics. The wet fibrous web is then moved through a drying section comprised of heated rollers (or "cans" in art parlance) where most of the remaining entrained water is removed. The dried fibrous web may then have a binder resin applied by any conventional means, such as dipping, spray coating, roller (gravure) application and the like. Heat may then subsequently be applied to dry the web.

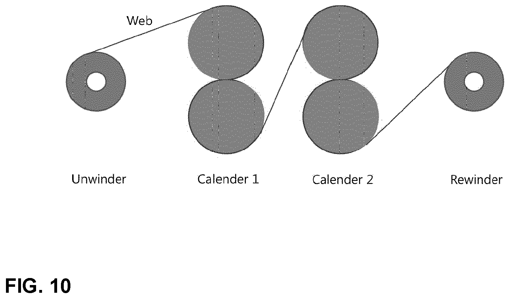

The nonwoven fibrous web may then be taken up on a roll for further processing into finished sheet or passed directly to a calendering section comprised of at least one pair, preferably a series of two pairs, of opposed calendering rolls as shown in FIG. 10. The calendering rolls operate so as to press (consolidate) the mass of nonwoven wet-laid fibers in the sheet to form the nonwoven fibrous web of the filtration media as disclosed herein. In preferred forms, the calendering rolls will operate so as to press the nonwoven fibrous web at calendering pressures of about 1 kN/m to about 150 kN/m and calendering temperatures of 110 °C to about 250 °C sufficient to allow the sheath of the bicomponent staple fiber component to melt and form a bond with the other synthetic fiber components in the nonwoven web. Calendering machine line speed can be selected to be between about 1 m/min to about 50 m/min. Such calendering machine line speeds and elevated temperatures/pressures as herein described results in hot area calendering of the fibrous web.

The calendering rolls do not point bond the nonwoven fibrous web. Instead, the calendering rolls impart substantially uniform pressure and temperature across the entire surface area of the web in the manner described hereinabove so as to evenly calender the web (i.e., area-calendering). Such hot area-calendering thereby causes a substantial (if not the entire) part of the lower melting sheath polymer of the bicomponent staple fibers in the nonwoven web to melt and thereby bond the remaining thermoplastic core component of the bicomponent staple fibers with one another and with the other synthetic staple fibers in the web.

The resulting nonwoven fibrous web may be employed as is in the form of filtration media or may be plied with additional fibrous media, for example pre-formed fibrous layers or a web formed of multiple layers in the wet-laid process. When the multiple fibrous web layers provide the filtration media, then the hot area calendered fibrous web layer of the embodiments disclosed herein is preferably positioned so as to be the outmost layer of the filtration media. By way of example, the fibrous web can be laminated to a membrane formed of expanded polytetrafluoroethylene (ePTFE) having a basis weight of, e.g., about 1 to about 50 g/m², or a multiple-layer (e.g., two or three fibrous web layers) filtration media could be provided whereby one of such multiple layers is a hot area calendered fibrous web layer according to the embodiments disclosed herein.

### E. MEDIA PROPERTIES

The resulting hot area-calendered fibrous web will exhibit a high dry and wet burst strength of greater than 10 bar, typically greater than 12 bar, for example, greater than 15 bar. These high dry and wet burst strengths are achievable by virtue of the hot area calendering as herein described melting the sheaths of the bicomponent staple fibers through the web so as to cause the remaining core component of the bicomponent staple fibers and the synthetic staple fibers to bond one to another throughout the fibrous web.

The density of the fibrous web will typically be less than about 0.45 g/cm³, for example less than about 0.40 g/cm³.

The pore size range of the fibrous web will typically be 25 µm or less, more typically 22 µm or less, usually 20 µm or less, with the minimum pore size being typically also 25 µm or less, or more typically 22 µm or less. The mean flow pore size can be 40 µm or less, typically 35 µm or less, for example 30 µm or less and the maximum pore size being 50 µm or less, typically 45 µm or less, for example, 40 µm or less.

The filtration media is capable of being classified as an F7 filter media according to EN779:2012 standard, i.e., filtration media having an average filtration efficiency of 60-80% and a minimum filtration efficiency of at least 35% for 0.4 µm particles.

The present invention will be further illustrated by the following non-limiting examples thereof.

### EXAMPLES

### 1. Test Methods

The following test methods were employed to obtain the data reported in the Table below.

Pore Size: Pore size (µm) was determined by the American Society of Testing and Materials (ASTM) Standard 316-03 (2011) (incorporated fully by reference herein). The minimum, maximum and mean flow pore sizes, and the number of pores of the media examples below were measured with Porometer 3G produced by Quantachrome Instruments (1900 Corporate Drive Boynton Beach, FL 33426 USA) with the reported pore size and pore number data being an average of two samples, one tested on each side of the media. (i.e. wire side and felt side in the case of wet-laid media).

The pore size and pore number data are measured using a technique known as capillary flow porometry. The sample is first wetted with a wetting fluid such that all the pores in the sample are filled. A nonreacting gas of increasing pressure is applied to one side of the wet sample to displace the liquid from the pores. The gas pressure and gas flowrate downstream of the sample are measured and plotted for the wet sample. After the sample is dry, the test is repeated to plot a gas flow vs. the applied pressure curve for the dry sample. Using such capillary porometry technique, the "maximum pore size", "minimum pore size" and "mean flow pore size" can be determined.

Maximum Pore Size: The gas pressure using the capillary flow porometry technique described hereinabove at which air flow through the media is first detected (i.e. the pressure at which the bubbles first begin to flow) is used to calculate the maximum pore size.

Minimum Pore Size is determined from the pressure at which the wet flow rate curve merges with dry curve using the capillary flow porometry technique described hereinabove.

Mean Flow Pore Size is the pore diameter at which the flow through a wetted medium is 50% of the flow through the dry medium at the same pressure drop using the capillary flow porometry technique described hereinabove.

Pore Size Range is defined as the difference between the Maximum Pore Size and the Minimum Pore Size (i.e. Pore Size Range = Maximum Pore Size - Minimum Pore Size).

Caliper: The caliper (thickness) of the media was measured according to the International Organization for Standardization (ISO) Standard ISO 534(2011), "Paper and board-Determination of thickness, density and specific volume" (incorporated fully by reference herein).

Air Permeability: Air Permeability of the media was measured at 125Pa water pressure differential, according ASTM Standard D737: Standard Test Method for Air Permeability of Textile Fabrics (incorporated fully by reference herein). The air flow through the media is reported in cubic foot per minute per sqaure foot of sample (cfm/sf or cfm).

Burst Strength: The pressure required to rupture a media sample when either dry ("dry burst strength") or wet ("wet burst strength") was measured according to ISO Standard 2758 (2014), "Paper-Determination of bursting strength" (incorporated fully by reference herein). Results are reported in kilogram force per square meter at media rupture and then converted to the units of bar.

Void Ratio: The void ratio was determined by the following procedure: A 40 mm x 40 mm dry test piece of the media having an initial weight (w1) was placed in a beaker with 200 cc of n-butyl alcohol and thereafter positioned in a desiccator which is evacuated until no bubbles emanating from the test piece were visibly observed. The test piece was removed from the n-butyl alcohol in the beaker and weighed immediately upon removal to obtain an initial weight (w2) and the reweighed after 30 seconds of removal to obtain a final wet weight (w3). The void ratio (%) was then calculated by the following formula: void ratio (%) = (w3-w1)/(w3-w2) x 100.

Air Filter Classification: Air filtration performance was determined according to Test Standard EN779:2012, "Particulate air filters for general ventilation" (incorporated fully by reference herein). According to this standard, the performance of air filtration media is rated for nine classes of filters in three groups: coarse filters: "G1-G4", medium filters: "M5-M6" and fine filters: "F7-F9". The rating for M and F class filters is based on the average efficiency for 0.4µm particles (i.e. the number fraction of 04µm particles retained on the filter). F-class filters also need to meet an additional minimum efficiency criterion that the minimum efficiency is the lowest of any of the following three values: initial efficiency, discharged efficiency or efficiency throughout the test's loading procedure.

Air Filtration Performance: The air filtration performance was determined by the International Organization for Standardization (ISO) 16890, "Air filters for general ventilation" (incorporated fully by reference herein).

Pulseiet Cleanability: The cleanability of a cleanable filter media was determined by ISO 11057:2011, "Air quality - Test method for filtration characterization of cleanable filter media" (incorporated fully by reference herein).

### 2. Materials

The following materials were employed:
LMF50: 4 denier, 6 mm length (4De*6mm) staple bicomponent low melting fibers commercially available from Huvis Corporation.
PET: Polyethylene terephthalate fibers were employed having 1.4 denier, 12 mm length (1.4De*12mm) commercially available from Toray Industries, 0.5denier, 5mm length (0.5De*5mm) commercially available from Huvis corporation, and 0.3 dtex, 5mm (0.3Dt*5mm) commercially available from Teijin Ltd.

### 3. Media Examples

The samples of Examples 1 and 2 below were produced by a wet-laid process noted above, with the sample of Example 2 having been subject to area-calendering.

Example 1: A base substrate was prepared by the method described above to form a 100% synthetic fiber wet-laid nonwoven media comprising 30 wt.% LMF50 4De*6mm bicomponent staple fibers and a mixture of PET staple fibers consisting of 30 wt.% PET 0.5De*5mm staple fibers (Huvis), 20 wt.% PET 1.4De*12mm (Toray), and 20 wt.% PET 0.3dt*5mm (Teijen). The substrate has a basis weight of 210g/m², a flat sheet caliper of 0.94 mm, and an air permeability of 80 cfm.

Example 2: The base substrate of media Example 1 was calendered at a calendering nip pressure of 75kN/m and a calendering temperature of 210 °C to obtain a calendered wet-laid nonwoven media having a basis weight of 210g/m², a flat sheet caliper of 0.60 mm, and an air permeability of 26 cfm.

Comparative Example 1 (Kolon Finon L2270NW): The comparative media of comparative example 1 is a commercially available PET spunbond media which is conventionally used for APC (Air Pollution Control) filter media as produced by Kolon Industries (KOLON Tower, 11, Kolon-ro, Gwacheon-si, Gyeonggi-do, South Korea) having a basis weight of 277g/m², a caliper of 0.61mm, and an air permeability of 25cfm.

Comparative Example 2 (Toray FSE21602A): The comparative media of comparative example 2 is another commercially available PET spunbond media which is conventionally used for APC (Air Pollution Control) filter media as produced by Toray Advanced Materials Korea Inc. (FKI Tower 35, 36 FI., 24 Yeoui-daero, Yeongdeungpo-gu, Seoul, South Korea) having a basis weight of 204 g/m², a caliper of 0.48 mm, and an air permeability of 28 cfm.

### 4. Experimental Results

### 4.1 Experimental Result 1

The media examples described above were tested to determine pore size data (minimum, mean flow and maximum pore sizes) and to determine the number of pores. In addition each of the media examples were tested for dry and wet burst strengths. The data appear in Table 1 below.

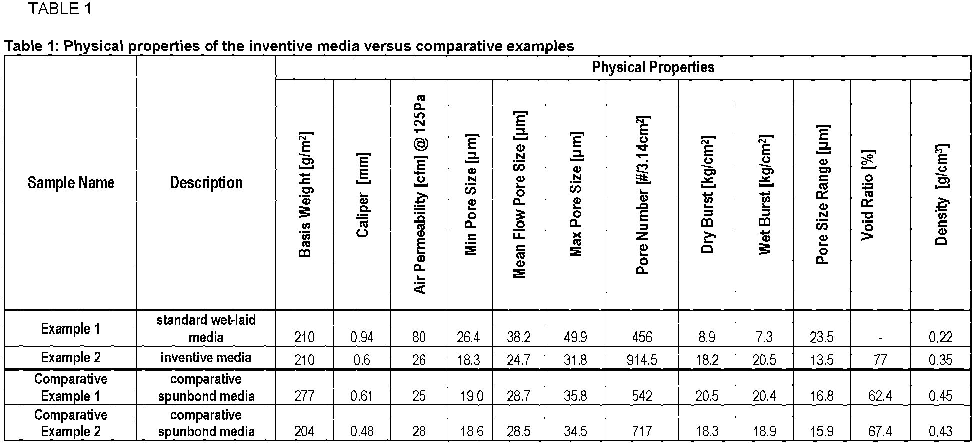

The above data show that the inventive media (Example 2) has much smaller maximum and mean flow pore sizes as compared to those of the standard wet-laid substrate (Example 1) and the comparative spunbond media examples. The inventive media (Example 2) also exhibited a greater number of pores per unit area than either the standard wet-laid sample or a typical spunbond media. The inventive media (Example 2) possessed an increased number of pores as compared to the standard wet-laid substrate (Example 1) which is believe to be caused by the consolidation of several subregions near the media surface due to the pressing of the hot calendering rolls. The inventive media (Example 2) additionally possessed a much greater number of pores as compared to the typical spunbond media (Comparative Examples 1 and 2) which is believed to be the result of area bonding achieved by hot calendering of the former instead of point bonding of the fibers in the latter. The inventive media (Example 2) also exhibited a greater void ratio, indicating that the inventive media is more porous than the typical spunbond media (Comparative Examples 1 and 2).

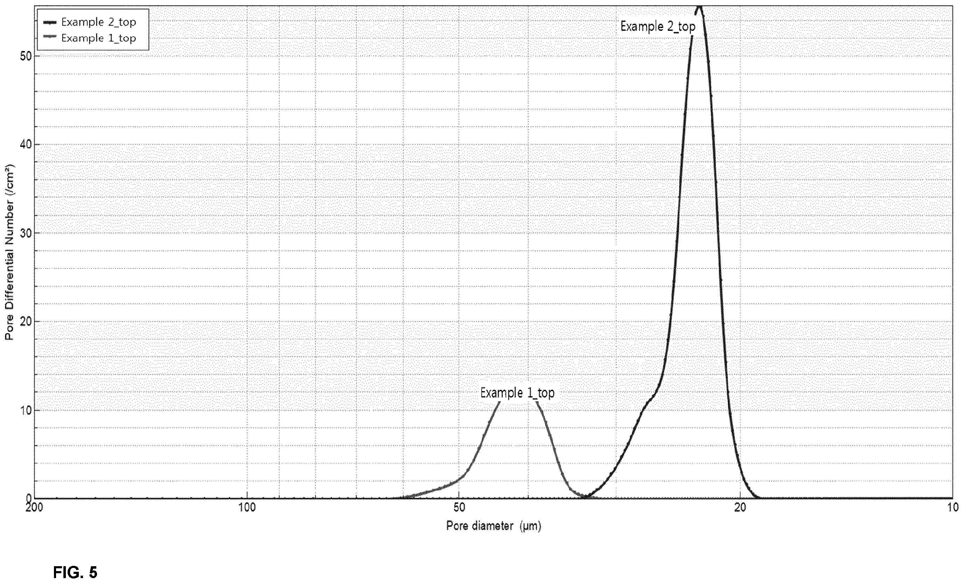

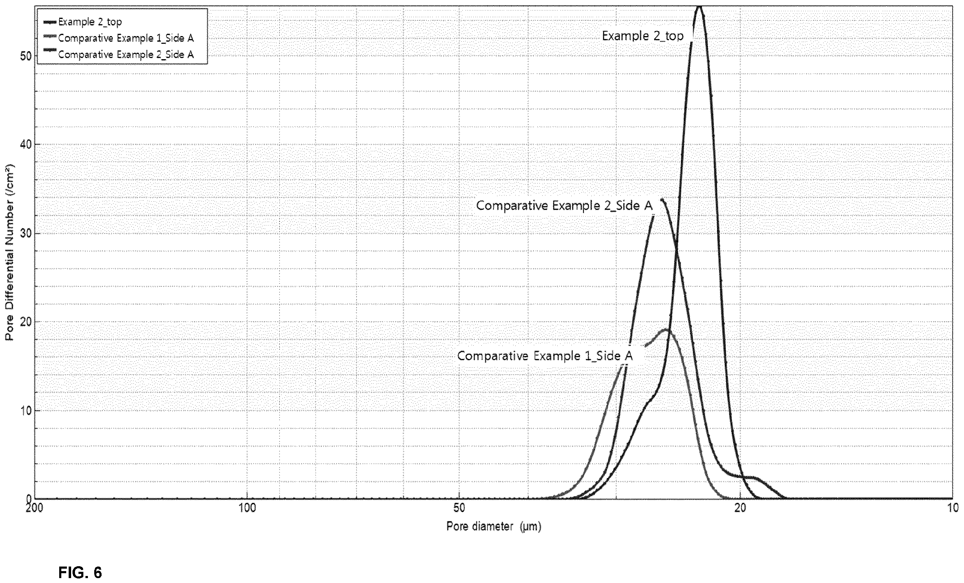

Significantly, the inventive media (Example 2) exhibited a very tight, narrow pore-size range as compared to the other examples (see Figures 5 and 6). The pore-size range is an important parameter as it indicates the variation in the size of pores within a media. A narrower pore-size range is indicative of a more uniform distribution of pores within the media, which increases the media's filtration performance. Additionally, the calendered inventive media also possessed a smaller pore size and a much lower web density than typical spunbond media. It is believed that the differences in the pore size range, packing (density) and pore structure of the media results in a higher filtration efficiency and dust holding capacity.

### 4.2 Experimental Result 2

Filtration performance tests were conducted using Palas MFP 3000 produced by Palas GmbH (Greschbachstraße 3 b 76229 Karlsruhe Germany), according to EN779: 2012 test standard. The inventive media and the comparative examples were tested without IPA discharge and with IPA discharge based on the IPA discharging method in Annex A of Test Standard EN779:2012. The data is provided in Table 2 below.

**Table 2: Air Filtration Performance of the inventive media versus comparative examples**

| | | **Performance Properties: EN779:2012** | | | | |
|---|---|---|---|---|---|---|
| **Sample Name** | **Description** | **Average Efficiency (0.4µm, 450Pa** | **Initial Efficiency (0.4µm)** | **Discharge Efficiency (0.4µm)** | **Dust Holding Capacity [g]** | **Filter Class** |
| **Example 2** | **Inventive media** | **86.4%** | **43.6%** | **45.6%** | **1.06** | **F7** |
| **Comparative Example 1** | **Comparative spunbond media** | **59.2%** | **4.6%** | **12.2%** | **0.49** | **M5** |
| **Comparative Example 2** | **Comparative spunbond media** | **82.1%** | **22.6%** | **13.6%** | **0.99** | **M6** |

The data in Table 2 above show that the inventive media of Example 2 possessed a much higher efficiency than the typical spunbond media of Comparative Examples 1 and 2. The efficiency of Example 2 is not affected after discharging the media with IPA. This is noticeably different, when compared to the spunbond media of Comparative Examples 1 and 2. The inventive media of Example 2 included short-cut synthetic fibers which are hydrophilic (due to the oils and surfactants used in the manufacturing process, which remain on the surface of the fibers). The fibers in the spunbond media however are not oiled and thus they possess a higher static charge and a much larger efficiency drop after IPA discharge than the inventive media of the embodiments disclosed herein.

As the data in Table 2 show, the Inventive Media in accordance with an embodiment of the invention disclosed herein exhibits an overall better average efficiency in addition to markedly better initial and discharge efficiencies for 0.4 µm particles and better dust holding capacity as compared to the conventional spunbond media of Comparative Examples 1 and 2. The Inventive Media therefore rated as a F7 filter media according to EN779:2012 standard whereas the conventional spunbond filtration media of Comparative Examples 1 and 2 can only achieve a lesser rating of M5 and M6, respectively.

### 4.3 Experimental Result 3

The inventive media of Example 2 and the comparative media of Comparative Examples 1 and 2 were also tested for pulse jet cleaning using a FilTEq GmbH tester (Amthausstr. 14, D-76227 Karlsruhe, Germany), according to ISO 11057:2011 test standard. Each test consisted of the following 4 phases:

| | |
|---|---|
| Phase 1 (Conditioning): | 30 loading cycles with differential pressure controlled pulse-jet cleaning and a cleaning set-point of 1000Pa |
| Phase 2 (Aging): | 10,000 pulse-jet cleaning cycles at an interval of 5 sec each |
| Phase 3 (Stabilizing): | 10 loading cycles with differential pressure controlled pulse-jet cleaning |
| Phase 4 (Measuring): | 2 hour loading cycle with differential pressure controlled pulse-jet cleaning |

The data of the pulse jet cleaning tests appear in Table 3 below.

**Table 3: Pulse-jet cleaning performance of the inventive media (Example 2) and media of Comparative Examples 1 and 2**

| **Sample Name** | **Description** | **Performance Properties: ISO11057:2011** | | | |
|---|---|---|---|---|---|
| | | **Cycle time after 30 cycles [s]** | **Cycle time after aging [s]** | **Dust Penetration after 30 cycles [mg]** | **Dust Penetration after aging [mg]** |
| **Example 2** | **Inventive media** | **359** | **340** | **4.97** | **0.16** |
| **Comparative Example 1** | **Comparative spunbond media** | **80** | **34** | **6.69** | **0.24** |
| **Comparative Example 2** | **Comparative spunbond media** | **188** | **92** | **7.68** | **0.65** |

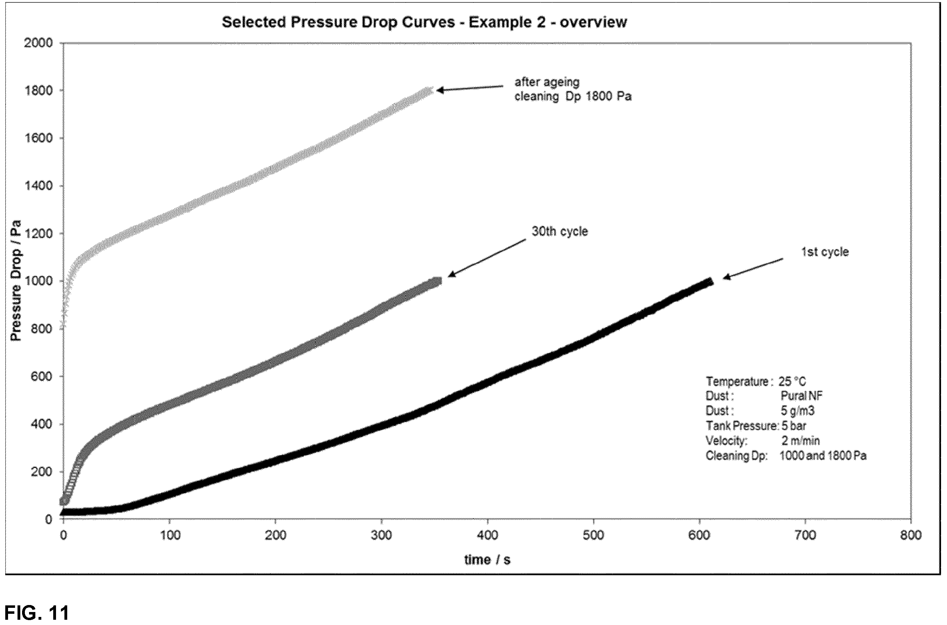

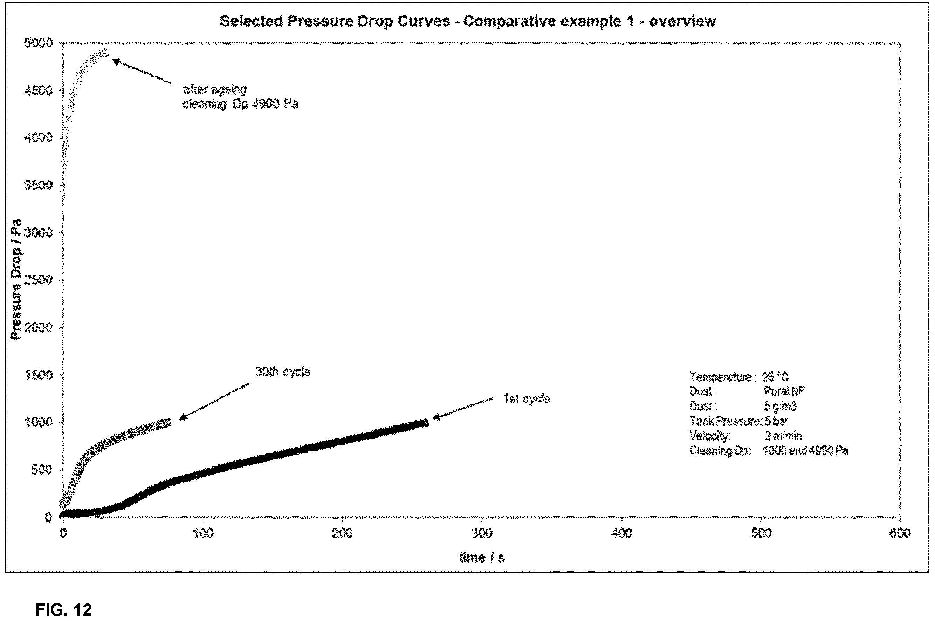

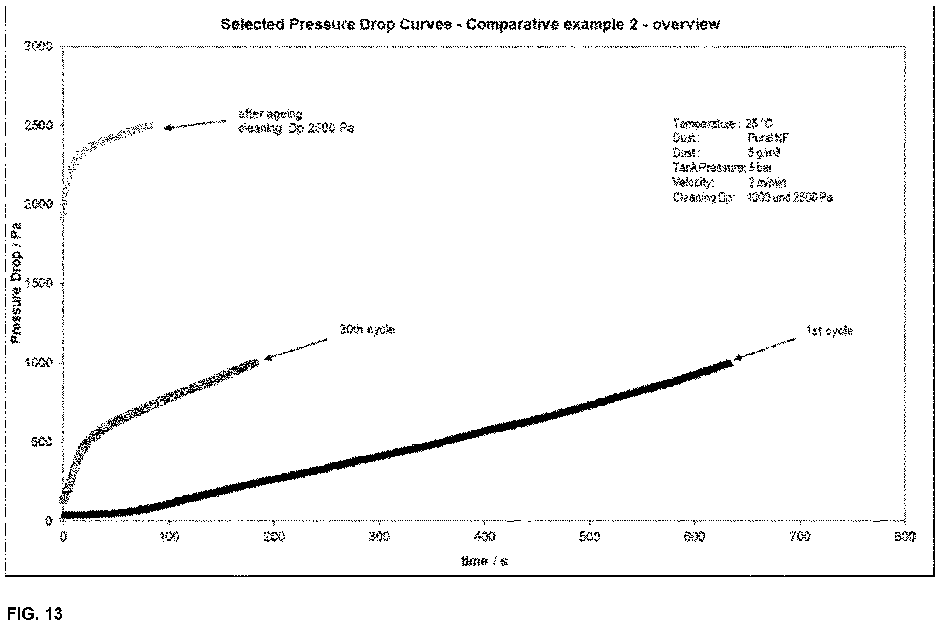

The data in Table 3 above show that the inventive media advantageously had approximately 2-5 fold longer cycle time at the 30th cycle than the comparative spunbond media of Comparative Examples 1 and 2. As can be seen from Figures 11-13, the inventive media of Example 2 also took longer to reach the targeted pressure drop, which resulted in the longer cycle time. After aging, the cycle time of the wet-laid calendered media continued to remain significantly higher (3-10times higher) than the spunbond media. Additionally, the wet-laid calendered inventive media of Example 2 also exhibited a much lower dust penetration at both the 30th cycle and when measured after aging than the comparative media of Comparative Examples 1 and 2.

### 4.4 Experimental Result - Fibrous web comprising flame retardant fibers

An embodiment made from flame retardant PET fibers, without any additional chemical treatment, is disclosed below.

The fibrous web was made using the same method as disclosed for Example 2 and comprised 100% PET fibers, where about 65 wt.% of the fibers were flame-retardant PET fibers commercially available from Toray Industries. The fibrous web comprised 25 wt.% RM PET 4De*6 mm fibers (Huvis), 10 wt.% PET 0.3dt*5mm fibers (Teijin), 45 wt.% FR PET 1.4D*6mm fibers (Toray), and 20 wt.% FR PET 3D*12 mm fibers (Toray).

The resulting fibrous filtration media is an F1 class flame retardant as tested by the DIN 53 438 standard. The physical properties appear in Table 4 below.

**Table 4. Physical properties of the inventive media comprising flame retardant fibers**

| **Properties** | **Unit** | **Example** (fibrous web comprising 65 wt% flame retardant PET fibers) |
|---|---|---|
| Grammage | g/m² | 200 |
| Caliper | mm | 0.57 |
| Air permeability (@125Pa) | cfm | 31 |
| Dry Burst strength | Kgf/cm2 | 14.7 |
| Stiffness | mg | 4000 |
| Max pore size | micron | 58 |
| Mean pore size | micron | 47 |

### 4.5 Experimental Result - Multi-layer filtration media

In the following examples (Examples A to D), the nonwoven fibrous web of the invention was plied with additional fibrous media to provide multi-layer filtration media.

**Example A:** A multiple layer filtration media where the hot area calendered fibrous web was laminated to a thin aluminized spunbond layer. The resulting multiple layer filtration media had very low electric resistance, below 1000 ohms.

**Example B:** The fibrous web was coated with PVDF nanofibers.

**Examples C and D:** The fibrous web was laminated with an expanded polytetrafluoroethylene (ePTFE). The resulting two layer filtration has a high filtration efficiency and can be classified as an E12 or H13 class filter media, according to EN 1822-1 test standard.

The physical properties of Examples A to D appear in Table 5.

**Table 5. Examples of fibrous filtration media formed of multiple fibrous web layers**

| **Properties** | **Unit** | **Example A** | **Example B** | **Example C** | **Example D** |
|---|---|---|---|---|---|
| | | (fibrous web + thin aluminized spunbond layer) | (fibrous web + PVDF nanofibers) | (fibrous web + ePTFE membrane) | (fibrous web + ePTFE membrane) |
| Grammage | g/m² | 248 | 200 | 200 | 100 |
| Caliper | mm | 0.67 | 0.57 | 0.45 | 0.29 |
| Air permeability (@125Pa) | cfm | 22 | 20.5 | 6.2 | 4.5 |
| Dry Burst strength | Kgf/cm2 | 17.7 | 14.8 | 14.3 | 6.7 |
| Stiffness | mg | 4450 | 3300 | 3970 | 340 |

### Embodiments

Embodiments of the invention include i.a. the following:
1. A fibrous filtration media comprising a wet-laid, hot area-calendered nonwoven fibrous web comprising:
   synthetic staple fibers; and
   from about 20 wt.% to about 80 wt.%, based on total weight of the fibrous web, sheath-core bicomponent staple fibers dispersed through the fibrous web, wherein
   the fibrous web exhibits a dry burst strength of greater than 10 bar.
2. The fibrous filtration media according to embodiment 1, wherein the fibrous web has a dry burst strength of greater than about 12 bar, preferably greater than about 15 bar.
3. The fibrous filtration media according to embodiment 1, wherein the fibrous web has a wet burst strength of greater than about 10 bar, preferably greater than about 12 bar, more preferably greater than about 15 bar.
4. The fibrous filtration media according to embodiment 1, wherein the fibrous web has a minimum pore size of 25 µm or less, preferably 22 µm or less.
5. The fibrous filtration media according to embodiment 3, wherein the fibrous web has a mean flow pore size of 40 µm or less, preferably 35 µm or less, more preferably 30 µm or less.
6. The fibrous filtration media according to embodiment 4, where the fibrous web has a maximum pore size of 50 µm or less, typically 45 µm or less, for example 40 µm or less.
7. The fibrous filtration media according to embodiment 3, wherein the fibrous web has a pore size range of 25µm or less, typically 22µm or less.
8. The fibrous filtration media according to embodiment 1, wherein the filtration media is capable of being classified as an F7 filter media according to EN779:2012 standard.
9. The fibrous filtration media according to embodiment 1 which comprises less than 10 wt.%, based on total weight of the fibrous web, of glass fibers.
10. The fibrous filtration media according to embodiment 8, wherein the glass fibers are glass microfibers.
11. The fibrous filtration media according to embodiment 1 wherein the synthetic fibers comprise a mixture of at least two different types of synthetic fibers.
12. The fibrous filtration media according to embodiment 10, wherein the synthetic fibers comprise a first type of synthetic fibers having an average diameter of between about 2.5µm to about 10µm, and a second type of synthetic fibers having an average diameter of between about 10µm to about 20µm.
13. The fibrous filtration media according to embodiment 11, wherein the first type of synthetic fibers have an average length of between about 1 mm to about 6 mm, and the second type of synthetic fibers have an average length of between about 5 mm to about 24 mm.
14. The fibrous filtration media according to embodiment 1, wherein the synthetic staple fibers comprise between about 5 wt.% to about 30 wt.%, typically between 10 wt.% to about 20 wt.%, based on total weight of the fibrous web, of regenerated cellulosic fibers.
15. The fibrous filtration media according to embodiment 13, wherein the regenerated cellulosic fibers comprise lyocell fibers.
16. The fibrous filtration media according to embodiment 1, wherein the filtration media further comprises at least one additive selected from the group consisting of wet strength additives, optical brighteners, fiber retention agents, colorants, fuel-water separation aides, and flame or fire retardants.
17. The fibrous filtration media according to embodiment 15, wherein the at least one additive comprises flame retardant fibers in an amount of about 40 to about 80 wt.%, based on total weight of the fibrous web.
18. The fibrous filtration media according to embodiment 1, wherein the synthetic staple fibers are forms of a polymer selected from the group consisting of polyethylene terephthalate (PET), polybutylene terephthalate (PBT), polyethylene (PE), polypropylenes (PP), nylon-6, nylon 6,6, nylon-6,12, and combinations thereof
19. The fibrous filtration media according to embodiment 1, wherein the sheath and core of the bicomponent staple fibers are formed of polyethylene terephthalate (PET), wherein the PET forming the sheath has a melting temperature which is less than that of the PET forming the core.
20. A method of making a fibrous web comprising:
   (a) forming a wet-laid fibrous web from an aqueous fibrous slurry comprising synthetic staple fibers and from about 20 wt.% to about 80 wt.%, based on total weight of the fibrous web, of sheath-core bicomponent staple fibers; and
   (b) subjecting the wet-laid fibrous web from step (a) to hot area calendering to melt the sheath of the bicomponent staple fibers so as to bond the synthetic staple fibers one to another and achieve a fibrous web having a dry burst strength of greater than 10 bar.
21. The method according to embodiment 19, wherein step (b) is practiced at a calendering pressure condition of between about 1 kN/m to about 150kN/m and a calendering temperature condition of between about 110 °C to about 250°C with a calendering line speed of between about 1 m/min to about 50 m/min.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope thereof.

## Claims

1. A fibrous filtration media comprising a wet-laid, hot area-calendered nonwoven fibrous web comprising:
synthetic staple fibers; and
from about 20 wt.% to about 80 wt.%, based on total weight of the fibrous web, sheath-core bicomponent staple fibers dispersed through the fibrous web, wherein
the fibrous web has a density less than about 0.45 g/cm³ and exhibits a dry burst strength of greater than 10 bar.

2. The fibrous filtration media according to claim 1, wherein the fibrous web has a dry burst strength of greater than about 12 bar, preferably greater than about 15 bar.

3. The fibrous filtration media according to claim 1 or 2, wherein the fibrous web has a wet burst strength of greater than about 10 bar, preferably greater than about 12 bar, more preferably greater than about 15 bar.

4. The fibrous filtration media according to any one of the preceding claims, wherein the fibrous web has a density less than about 0.40 g/cm³.

5. The fibrous filtration media according to any one of the preceding claims, wherein the fibrous web has a mean flow pore size of 40 µm or less, preferably 35 µm or less, more preferably 30 µm or less.

6. The fibrous filtration media according to any one of the preceding claims, where the fibrous web has a maximum pore size of 50 µm or less, typically 45 µm or less, for example 40 µm or less.

7. The fibrous filtration media according to any one of the preceding claims, wherein the fibrous web has a pore size range of 25µm or less, typically 22µm or less.

8. The fibrous filtration media according to any one of the preceding claims which comprises between 0 and 20 wt.%, optionally less than 10 wt.%, based on total weight of the fibrous web, of glass fibers, optionally glass microfibers.

9. The fibrous filtration media according to any one of the preceding claims wherein the synthetic fibers comprise a mixture of at least two different types of synthetic fibers.

10. The fibrous filtration media according to claim 9, wherein the synthetic fibers comprise a first type of synthetic fibers having an average diameter of between about 2.5µm to about 10µm, and a second type of synthetic fibers having an average diameter of between about 10µm to about 20µm, and wherein optionally the first type of synthetic fibers have an average length of between about 1 mm to about 6 mm, and the second type of synthetic fibers have an average length of between about 5 mm to about 24 mm.

11. The fibrous filtration media according to any one of the preceding claims, wherein the synthetic staple fibers comprise between about 5 wt.% to about 30 wt.%, typically between 10 wt.% to about 20 wt.%, based on total weight of the fibrous web, of regenerated cellulosic fibers, wherein the regenerated cellulosic fibers optionally comprise lyocell fibers .

12. The fibrous filtration media according to any one of the preceding claims, wherein the filtration media further comprises at least one additive selected from the group consisting of wet strength additives, optical brighteners, fiber retention agents, colorants, fuel-water separation aides, and flame or fire retardants.

13. The fibrous filtration media according to claim 12, wherein the at least one additive comprises flame retardant fibers in an amount of about 40 to about 80 wt.%, based on total weight of the fibrous web.

14. The fibrous filtration media according to any one of the preceding claims, wherein the synthetic staple fibers are forms of a polymer selected from the group consisting of polyethylene terephthalate (PET), polybutylene terephthalate (PBT), polyethylene (PE), polypropylenes (PP), nylon-6, nylon 6,6, nylon-6,12, and combinations thereof.

15. The fibrous filtration media according to any one of the preceding claims, wherein the sheath and core of the bicomponent staple fibers are formed of polyethylene terephthalate (PET), wherein the PET forming the sheath has a melting temperature which is less than that of the PET forming the core.

16. A method of making a fibrous web comprising:
(a) forming a wet-laid fibrous web from an aqueous fibrous slurry comprising synthetic staple fibers and from about 20 wt.% to about 80 wt.%, based on total weight of the fibrous web, of sheath-core bicomponent staple fibers; and
(b) subjecting the wet-laid fibrous web from step (a) to hot area calendering to melt the sheath of the bicomponent staple fibers so as to bond the synthetic staple fibers one to another and achieve a fibrous web having a density less than about 0.45 g/cm³, and a dry burst strength of greater than 10 bar.

17. The method according to claim 16, wherein step (b) is practiced at a calendering pressure condition of between about 1 kN/m to about 150kN/m and a calendering temperature condition of between about 110 °C to about 250°C with a calendering line speed of between about 1 m/min to about 50 m/min.
